# EUROPÄISCHE PATENTANMELDUNG

(11) **EP 1 148 654 A1**
(43) Veröffentlichungstag der Anmeldung: **24.10.2001**
(21) Anmeldenummer: 00108465.6
(22) Anmeldetag: 18.04.2000
(51) Int. Cl.: H04B 1/40, H04B 1/52

(54) **Sende- und Empfangseinheit**

(71) Anmelder: Infineon Technologies AG, 81541 München (DE)
(72) Erfinder: Boos, Zdravko, 81827 München (DE)
(74) Vertreter: Fischer, Volker, Dipl.-Ing.

(57) **Zusammenfassung**

Es ist eine Sende- und Empfangseinheit zur Anwendung in UMTS-Systemen angegeben, welche empfängerseitig eine Zwischenfrequenz in einem Bereich von 0 bis 0,5 Megahertz und sendeseitig eine Zwischenfrequenz von 190 Megahertz aufweist. Die beschriebene Anordnung ermöglicht den Betrieb mit FDD, TDD und FDD-variabler Duplexfrequenz. Wenn einem Netzbetreiber lediglich eine geringe Bandbreite zur Verfügung steht, kann die beschriebene Anordnung dadurch besonders energiesparend betrieben werden, daß lediglich ein Lokaloszillator (LO1) für ersten und zweiten Mischer (M1, M2) benötigt wird. In diesem Fall kann die sendeseitige Zwischenfrequenz von 190 Megahertz um +/- 5 oder +/- 10 Megahertz verstellt werden. Die beschriebene Anordnung ist in einfacher Weise hochintegrierbar.

## Beschreibung

Die Erfindung betrifft eine Sende- und Empfangseinheit (Transceiver).

Das heute weit verbreitete Mobilfunksystem GSM, Global System for Mobile Communication, wird aus technologischen und ökonomischen Gründen von einem Mobilfunksystem der dritten Generation abgelöst werden. Dieses System ist in Europa unter dem Namen UMTS, Universal Mobile Telecommunications System, und international als IMT-2000, International Mobile Telecommunication System 2000, bekannt. UMTS bzw. IMT-2000 soll eine weitaus höhere Datenübertragungskapazität als GSM ermöglichen, sowie einen länderübergreifenden Standard schaffen.

Ein System, welches in der Lage ist, gleichzeitig zu senden und zu empfangen, wird als Vollduplex-System bezeichnet. Es wird auch dann von vollduplexfähigen Systemen gesprochen, wenn Senden und Empfangen nicht gleichzeitig erfolgen, das Umschalten zwischen den beiden Phasen aber vom Teilnehmer unbemerkt erfolgt. Man unterscheidet zwei grundlegende Duplexverfahren: Frequenzduplex (Frequency Division Duplex, FDD), bei dem Senden und Empfangen in verschiedenen entsprechend getrennten Frequenzbändern erfolgen, und Zeitduplex (Time Division Duplex, TDD), bei dem die beiden Übertragungsrichtungen in verschiedenen Zeitlagen getrennt werden.

Allgemein wird ein Senden von einer Mobilstation zu einer Basisstation oder Feststation als Uplink, eine Übertragung von Basisstation oder Feststation zur Mobilstation als Downlink bezeichnet.

Bei TDD sind Sende- und Empfangsfrequenzen gleich. Für FDD mit fester Duplexfrequenz ist bei UMTS eine Duplexfrequenz von 190 Megahertz vorgesehen.

Neben der beschriebenen TDD- und FDD-Übertragung ist bei UMTS zusätzlich ein FDD mit variabler Duplexfrequenz vorgesehen, welche zwischen 134,8 und 245,2 Megahertz liegen kann. Als Duplexfrequenz wird hierbei der Frequenzabstand von Sende- und Empfangsfrequenz bezeichnet.

In der UMTS-Spezifikation sind für TDD-Übertragung zwei Frequenzbänder vorgesehen, von 1900 bis 1920 Megahertz und von 2010 bis 2025 Megahertz. FDD-Übertragung mit festem Duplexabstand von 190 Megahertz ist in einem Sendeband von 1920 bis 1980 und einem Empfangsband von 2110 bis 2170 Megahertz vorgesehen.

Gegenüber der bei TDD und FDD mit fester Duplexfrequenz üblichen, festen Zuordnung zweier Kanäle zueinander, nämlich jeweils einem Uplink- und einem Downlink-Kanal, ist mit FDD von variabler Frequenz eine asymmetrische Datenübertragung möglich, bei der beispielsweise zwei Downlink-Kanäle mit einem Uplink-Kanal kombiniert werden können.

Bei bekannten IMT-2000-Transceivern ist eine Sende-Zwischenfrequenz von 380 Megahertz und eine Empfangs-Zwischenfrequenz von 190 Megahertz üblich. Die 380 Megahertz Zwischenfrequenz müssen bei UMTS jedoch auf ca. 2 Gigahertz hochgemischt werden, wodurch die benötigte Lokaloszillator-Frequenz in das bekannte ISM-(Industrial Scientific and Medical-) Band fällt, welches bei ca. 2,4 Gigahertz liegt. Dieses Band wird jedoch bei dem sogenannten Bluetooth-Standard zur Bildung drahtloser Peripherie-Schnittstellen benutzt. Da in Mobiltelefonen, die Sende- und Empfangseinheiten aufweisen, Bluetooth-Schnittstellen integrierbar sein sollen, sind Störungen bei Verwendung einer 380-MHz-Zwischenfrequenz zu erwarten.

Im Gigahertz-Radio-Frontend-Projekt GIRAFE wird ein Empfänger mit einer Zwischenfrequenz von 0 Megahertz für ein UMTS-System vorgeschlagen. Vergleiche hierzu die Internet-Seite http://www.at.infowin.org/acts/analysys/concertation/mobility /girafe.htm.

Aufgabe der vorliegenden Erfindung ist es, eine Sende- und Empfangseinheit anzugeben, welche für die Duplexverfahren FDD, TDD und FDD mit variablem Frequenzabstand geeignet ist, und welche einen geringen Energiebedarf aufweist und zudem hochintegrierbar ist.

Erfindungsgemäß wird die Aufgabe mit einer Sende- und Empfangseinheit gelöst, mit
- einer Duplex-Einheit, die an eine Antenne anschließbar ist, und die einen Sendezweig von einem Empfangszweig trennt,
- einem ersten Mischer, der eingangsseitig an den Empfangszweig angeschlossen ist, der an einen ersten Lokaloszillator angeschlossen ist und der ausgangsseitig an einen Empfangs-Zwischenfrequenzpfad angeschlossen ist, und
- einem zweiten Mischer, der ausgangsseitig an den Sendezweig angeschlossen ist, der eingangsseitig an einen Sende-Zwischenfrequenzpfad angeschlossen ist und der mit einem Lokaloszillator verbunden ist,
- wobei die Zwischenfrequenz des Empfangs-Zwischenfrequenzpfads in einem Bereich von 0 bis 0,5 Megahertz liegt, und
- wobei die Zwischenfrequenz des Sende-Zwischenfrequenzpfads (TI) in einem Bereich von 180 Megahertz bis 200 Megahertz liegt.

Gegenüber bestehenden IMT-2000-Transceiver-Konzepten mit einer Empfänger-Zwischenfrequenz von 190 Megahertz, welche sehr nahe bei üblichen Fernseh-Frequenzen liegt, hat die beschriebene Anordnung mit einer Empfangs-Zwischenfrequenz in einem Bereich von 0 bis 0,5 Megahertz den Vorteil, daß die Möglichkeit der Einkopplung von Fernseh-Übertragungsfrequenzen verringert ist. Bei UMTS-Empfängern, die eine sehr hohe Empfangsempfindlichkeit haben, ist dies von besonderer Bedeutung. Da eine Zwischenfrequenz in einem Bereich von 0 bis 0,5 Megahertz im Empfänger vorgesehen ist, ist der Energieverbrauch gering. Ein Empfänger, welcher eine Zwischenfrequenz in einem Bereich von 0 bis 0,5 Megahertz aufweist, benötigt keine Spiegelfrequenzfilter. Hierdurch wird der Aufbau der Sende- und Empfangseinheit vereinfacht. Die Empfangs-Zwischenfrequenz in einem Bereich von 0 bis 0,5 Megahertz ermöglicht ein Höchstmaß an Flexibilität bezüglich der Integration anderer Mobilfunk-Systeme. Wenn eine CDMA (Code Division Multiple Access)-Teilnehmerseparierung zur Anwendung kommt, bei der eine AC-Kopplung erlaubt ist, werden die DC-Offsetprobleme, die 0-Megahertz-Zwischenfrequenz-Empfängern üblicherweise anhaften, weitgehend unterdrückt. Weiterhin reduziert die Integration des ersten Lokaloszillators in der Sende- und Empfangseinheit Probleme bezüglich Selbstmischens beim Lokaloszillator. Insgesamt ermöglicht die beschriebene Anordnung ein Höchstmaß an Integrationsfähigkeit.

Die Sende-Zwischenfrequenz von 190 Megahertz +/- 5 Megahertz oder +/- 10 Megahertz führt gegenüber den für IMT-2000 bekannten 380 Megahertz zu einem deutlichen geringeren Energieverbrauch. Da Sende- und Empfangseinheiten im Mobilfunk üblicherweise in Mobiltelefonen eingesetzt werden, welche besonders klein und leicht sein sollen, ist dieses Merkmal besonders vorteilhaft. Wenn bei FDD mit variablem Frequenzabstand die Abweichung des Frequenzabstands von 190 Megahertz geringer oder gleich +/- 10 Megahertz beträgt, so kann mit einem gemeinsamen ersten Lokaloszillator sowohl die Umsetzung der Empfangsfrequenz in die Empfänger-Zwischenfrequenz als auch die Umsetzung der Sender-Zwischenfrequenz in die Sendefrequenz erfolgen. Hierdurch werden Energieverbrauch und Platzbedarf der Sende- und Empfangseinheit sowie Störsignale weiter reduziert.

Da in der Mobilfunk-Praxis mehrere Netzbetreiber vorhanden sind, unter denen die vorhandene Bandbreite des Netzes beziehungsweise der Übertragungskanäle aufgeteilt werden muß, ist es denkbar, daß ein einzelner Netzbetreiber lediglich 15 Megahertz Bandbreite im UMTS-System erhält. Bei FDD mit variablem Duplexabstand ist die Duplexfrequenz folglich begrenzt auf 190 Megahertz +/- 5 Megahertz, beziehungsweise +/- 10 Megahertz. Daher ist es vorteilhaft, die Sende-Zwischenfrequenz in der Weise zu variieren, daß sie entweder 180 oder 185 oder 190 oder 195 oder 200 Megahertz beträgt. In diesem Fall kann lediglich ein erster Lokaloszillator beziehungsweise spannungsgeregelter Oszillator die Erfordernisse des Frequenzduplexverfahrens mit variabler Duplexfrequenz für einen Netzbetreiber, dem nur eine begrenzte Bandbreite zur Verfügung steht, bereitstellen. Hierdurch ist ein FDD-Betrieb mit variabler Duplex-Frequenz bei geringem Leistungsverbrauch und geringer Anzahl von Störsignalen möglich.

In einer vorteilhaften Ausführungsform der vorliegenden Erfindung ist ein erster Umschalter vorgesehen, mit dem zwischen dem ersten Lokaloszillator und einem weiteren Lokaloszillator umgeschaltet werden kann. Für einen FDD-Betrieb mit variabler Duplexfrequenz, die nur in geringer Weise von der festen Duplexfrequenz abweicht, genügt der energiesparende Betrieb mit einem einzigen ersten Lokaloszillator, welcher mit dem ersten Mischer und mit dem zweiten Mischer verbunden ist. Wenn jedoch das volle Spektrum des FDD mit variablen Frequenzabstand von 134,8 bis 245,2 Megahertz ausgeschöpft werden soll, kann der zweite Mischer auf den weiteren Lokaloszillator umgeschaltet werden. Um unerwünschte Signale zu verhindern, die durch den Betrieb zweier Lokaloszillatoren, welche nahe beieinanderliegende Oszillationsfrequenzen haben, und durch Nichtlinearitäten in der Sende- und Empfangseinheit hervorgerufen werden, sollte der weitere Lokaloszillator eine Oszillationsfrequenz haben, welche unterhalb der Sendefrequenz der Sende- und Empfangseinheit liegt. Hierdurch wird der weitere Lokaloszillator nicht mit dem ersten Lokaloszillator in Interferenz treten, wodurch beide Lokaloszillatoren auf einem gemeinsamen IC integrierbar sind.

In einer weiteren, vorteilhaften Ausführung der vorliegenden Erfindung weist eine Basisband-Einheit, an die der Sende- und der Empfangs-Zwischenfrequenz-Pfad angeschlossen sind, einen digitalen Mischer auf, welcher in Schritten von 200 Kilohertz verstimmbar ist. Dieser digitale Mischer leistet eine Frequenzkorrektur von +/- 200 beziehungsweise +/- 400 Kilohertz als Abweichung von der festen Duplexfrequenz von 190 Megahertz. Diese zweischrittige Abstimmlösung hat den Vorteil, daß die Hochfrequenz-Phasenregelkreise in erstem und weiterem Lokaloszillator mit Schritten von 1 Megahertz arbeiten können. Hierdurch wird die Vervielfachung des Phasenrauschens in den Phasenregelkreisen reduziert, so daß die Anforderungen an Phasendetektoren beziehungsweise Ladungspumpen entspannt werden können und somit der Energieverbrauch reduziert werden kann. Beispielsweise wird die Vervielfachung des Phasenrauschens um den Faktor 20 * log(5) im Falle von 1 Megahertz-Schritten im Phasendetektor reduziert. Hierdurch wird außerdem das Umschalten des Phasenregelkreises schneller sein können. Die Zeit für eine Frequenzsuche im UMTS-System wird um den Faktor 4 dadurch reduziert, daß die Schaltzeiten im digitalen Mischer im Vergleich mit einem Phasenregelkreis deutlich kleiner sind. Die Kapazitäten im Phasenregelkreis können kleiner sein, wodurch sich zusätzliche Vorteile bei der Integration ergeben. Wenn durch Änderungen der UMTS-Spezifikation zukünftig 100 Kilohertz-Frequenzschritte erforderlich sein sollten, können diese im digitalen Mischer leichter implementiert werden als in Phasenregelkreisen.

Weitere Einzelheiten der Erfindung sind in den Unteransprüchen angegeben.

Die Erfindung wird nachfolgend an zwei Ausführungsbeispielen anhand der Zeichnungen näher erläutert.

Es zeigen:
- Figur 1: ein vereinfachtes Blockschaltbild einer erfindungsgemäßen Sende- und Empfangseinheit und
- Figur 2: eine zweite Ausführungsform einer erfindungsgemäßen Sende- und Empfangseinheit.

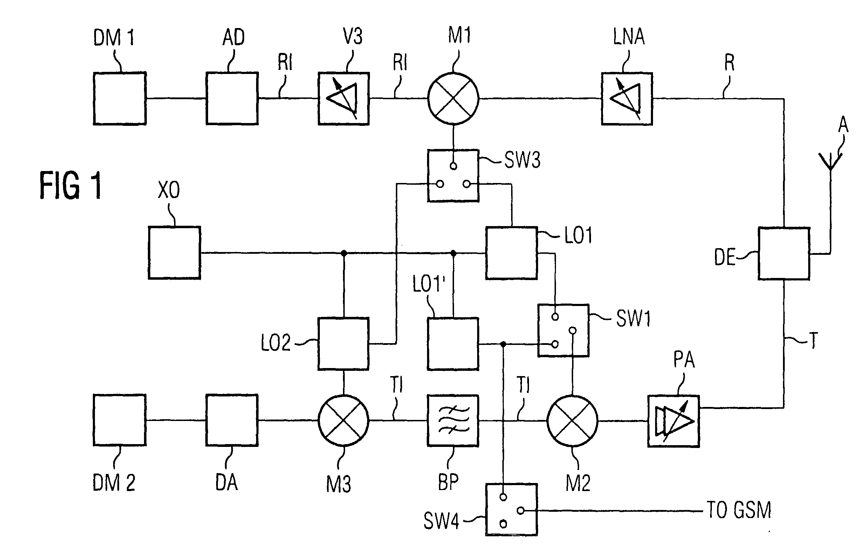

Figur 1 zeigt eine Sende- und Empfangseinheit mit einer Duplex-Einheit DE, welche an eine Sende- und Empfangsantenne A angeschlossen ist. Auf dieser Hochfrequenz-Ebene trennt die Duplex-Einheit den Sendezweig T vom Empfangszweig R. Der Empfangszweig R weist einen rauscharmen Vorverstärker LNA auf, welcher regelbar ausgeführt ist. Der Empfangszweig R ist an einen ersten Mischer M1 angeschlossen, der an einen ersten Lokaloszillator LO1 über einen dritten Schalter SW3 angeschlossen ist. Im ersten Mischer M1 wird ein Empfangssignal mit einem Lokaloszillator-Signal auf eine Zwischenfrequenz-Ebene heruntergemischt. An den ersten Mischer M1 ist ein Empfangs-Zwischenfrequenzpfad RI angeschlossen, welcher einen Verstärker V3 aufweist, der regelbar ausgeführt ist. An den Empfangs-Zwischenfrequenzpfad schließt sich eine Analog-Digital-Wandlung AD sowie ein erster digitaler Mischer DM1 an. Dieser dient zur Verstimmung der Frequenz im Empfangs-Zwischenfrequenzpfad RI in einem Raster von 200 Kilohertz. Weitere, üblicherweise in einem Transceiver vorgesehenen Bausteine, wie beispielsweise Sprachdecodierung, sind in Figur 1 nicht eingezeichnet. Der Sendezweig T weist einen Sendeverstärker PA auf, welcher regelbar ist, und ist an einen zweiten Mischer M2 angeschlossen. Ein an den zweiten Mischer M2 angeschlossener Sende-Zwischenfrequenzpfad TI kann ein Zwischenfrequenz-Signal aufweisen, welches mit einem Lokaloszillator-Signal auf die gewünschte Sendefrequenz gemischt wird. Der Sende-Zwischenfrequenzpfad TI weist ein Bandpaß-Filter BP auf, welches bei einer Zwischenfrequenz im Sender von 190 Megahertz eine Mittenfrequenz von 190 Megahertz aufweist. Der Durchlaßbereich des Bandpaß-Filters BP reicht dabei von 180 bis 200 Megahertz. Ein zweiter Lokaloszillator LO2 ist mit einem dritten Mischer M3 verbunden, an den der Sende-Zwischenfrequenzpfad TI angeschlossen ist. Weiterhin ist der dritte Mischer M3 an einen Baustein zur Digital/Analog-Wandlung DA angeschlossen, mit dem ein zweiter digitaler Mischer DM2 zur Verstimmung der Sende-Basisbandfrequenz in Schritten von 200 Kilohertz verbunden ist. Der dritte Mischer M3 dient zum Hochmischen eines Basisband-Signals auf eine Zwischenfrequenz-Ebene mittels einer zweiten Oszillationsfrequenz.

Der erste und der zweite digitale Mischer DM1, DM2 dienen im Basisband auch zur automatischen Frequenzregelung (automatic frequency control, AFC). Hierfür ist mit den digitalen Mischern jede Frequenz von 0,1 Hertz bis zur halben Taktfrequenz der Mischer einstellbar. In der UMTS-Spezifikation ist für Senden und Empfangen ein Frequenzraster mit Schritten von 200 Kilohertz beschrieben. Zusammen mit in den Lokaloszillatoren LO1, LO1', LO2 angeordneten Synthesizern mit einer Schrittweite von 1 Megahertz ist mit einer Verstimmung der digitalen Mischer um +/- 200 Kilohertz oder +/- 400 Kilohertz in vorteilhafter Weise jede UMTS-Frequenz in einem Raster von 200 Kilohertz einstellbar.

Für einen FDD-Betrieb mit einer variablen Duplexfrequenz, welche eine große Abweichung von der festen Duplexfrequenz von 190 Megahertz aufweist, kann zur Umschaltung der Verbindung des zweiten Mischers M2 mit dem ersten Lokaloszillator auf einen weiteren Lokaloszillator LO1' ein erster Umschalter SW1 vorgesehen sein. Mit dem dritten Schalter SW3 kann der erste Mischer M1 vom ersten Lokaloszillator LO1 auf den zweiten Lokaloszillator LO2 umgeschaltet werden. Dies ist insbesondere für TDD-Empfang vorteilhaft, da sich in diesem Fall die Frequenzen des ersten und des weiteren Lokaloszillators LO1, LO1'deutlich von der erforderlichen TDD-Empfangs-Zwischenfrequenz unterscheiden, während sich letztere mit dem Frequenzbereich des zweiten Lokaloszillators überschneidet, wenn dieser der siebenfachen Sende-Zwischenfrequenz entspricht und die doppelte TDD-Empfangsfrequenz durch Multiplikation der Frequenz des zweiten Lokaloszillators LO2 mit dem Faktor drei erzeugbar ist. Da FDD- bzw. TDD-Senden und TDD-Empfang nicht gleichzeitig erfolgen, kann der zweite Lokaloszillator beide Betriebsarten unterstützen. . Der erste Lokaloszillator LO1, der zweite Lokaloszillator LO2 und der weitere Lokaloszillator LO1' sind an einen gemeinsamen Referenzoszillator XO angeschlossen. Die beschriebene Anordnung weist den Vorteil auf, daß die Lokaloszillatoren nur einen kleinen Abstimmbereich aufweisen. Hierdurch sind sie bezüglich Phasenrauschen, Empfindlichkeit, Substrat-Rauschen und Ansprechen verbessert.

Da bei Einführung des UMTS-Systems zunächst keine flächendekkende Netzabdeckung gewährleistet sein wird, und da zugleich die bestehenden GSM-Netze eine fast flächendeckende Versorgung bieten, ist es vorteilhaft, daß UMTS-Transceiver bei schlechtem UMTS-Empfang in der Lage sind, die Verfügbarkeit und die Qualität der GSM-Kanäle zu überwachen. Hierzu ist eine spezielle Betriebsart, der sogenannte slotted mode, vorgesehen. Diese weist zeitliche Unterbrechungen bei der Übertragung auf, während denen die GSM-Kanäle überwacht werden können. Um die Übertragungsrate konstant zu halten, müssen die Daten vor den Unterbrechungen komprimiert werden. Hierfür ist der sogenannte compressed mode vorgesehen. Dieser reduziert jedoch die Netzkapazität. Zur Überwachung von GSM-1800-Kanälen ist der slotted mode vorgesehen, während die Überwachung von GSM-900-Kanälen, das heißt GSM-Empfang, gleichzeitig mit einem UMTS-Senden erfolgen kann. Für dieses UMTS-Senden werden der erste und der zweite Lokaloszillator LO1, LO2 verwendet, während zur gleichen Zeit der weitere Lokaloszillator LO1' zum GSM-Empfang eingesetzt ist. Hierzu ist der vierte Schalter SW4 vorgesehen, der den weiteren Lokaloszillator LO1' auf einen GSM-Transceiver durchschalten kann.

Zur besseren Übersicht ist eine Tabelle mit den Frequenzbereichen der Lokaloszillatoren in Megahertz (dritte und vierte Zeile) sowie den jeweiligen Sende- und Empfangsbetriebsarten (erste Spalte) angegeben. Ein X bedeutet dabei einen aktiven Lokaloszillator. Tx steht für Senden (Transmit) und Rx für Empfangen (Receive).

| Lokaloszillator | | LO1 | LO2 | | LO1' | | |
|---|---|---|---|---|---|---|---|
| Betriebsart | | | | TDD Rx | | GSM 900Rx | GSM 1800Rx |
| Frequenzbereich in MHz | | 4184 bis 4426 | 1330 +/- 70 | 3800 bis 4050 | 3464 bis 3840 | 3700 bis 3840 | 3610 bis 3760 |
| FDD Fixed Duplex | Tx | X | X | | | | |
| FDD Fixed Duplex | Rx | X | | | | | |
| FDD Var.Duplex +/-5, +/-10 MHz | Tx | X | X | | | | |
| FDD Var.Duplex +/-5, +/-10 MHz | Rx | X | | | | | |
| FDD Var.Duplex 134,8 - 245,2 MHz | Tx | X | X | | X | | |
| FDD Var.Duplex 134,8 - 245,2 MHz | Rx | | | | | | |
| TDD | Tx | X | X | | | | |
| TDD | Rx | | | X | | | |
| FDD Standby | Rx | X | | | | | |
| TDD Standby | Rx | | | X | | | |
| UMTS FDD transmit | Tx | X | X | | | | |
| GSM Receive | Rx | | | | | X | |
| UMTS TDD Transmit | Tx | X | X | | | | |
| GSM Receive | Rx | | | | | X | |

Der Frequenzbereich des zweiten Lokaloszillators LO2 im FDD-Betrieb von 1260 bis 1400 Megahertz entspricht dem Siebenfachen der Sende-Zwischenfrequenz, welche in einem Bereich von 180 Megahertz bis 200 Megahertz liegt. Der Frequenzbereich des zweiten Lokaloszillators LO2 für die Betriebsart TDD-Empfang liegt im Bereich der dritten Harmonischen des Frequenzbereichs des zweiten Lokaloszillators LO2 im FDD-Betrieb. Für GSM-900, das heißt GSM-System im 900-Megahertz-Band, ist bei einem Empfangsband von 925 bis 960 Megahertz und vierfacher Frequenz eine Lokaloszillator-Frequenz von 3700 bis 3840 Megahertz erforderlich. Für GSM-1800, das heißt GSM-System im 1800-Megahertz-Band, ist bei einem Empfangsband von 1805 bis 1880 Megahertz und doppelter Frequenz eine Lokaloszillator-Frequenz von 3610 bis 3760 Megahertz erforderlich.

Das Ausführungsbeispiel gemäß Figur 1 weist den Vorteil auf, daß der Betrieb sowohl mit Zeitduplex, Frequenzduplex mit fester und Frequenzduplex mit variabler Duplexfrequenz möglich ist. Der einfache Aufbau sowie die hohe Integrationsfähigkeit ergeben sich durch die Empfangs-Zwischenfrequenz in einem Bereich von 0 bis 0,5 Megahertz und die Sende-Zwischenfrequenz von 190 Megahertz. Die gegenüber bekannten IMT-2000-Transceivern geringeren Sende- und Empfangs-Zwischenfrequenzen sowie der mögliche Betrieb mit lediglich einem ersten Lokaloszillator LO1 stellen einen geringen Energiebedarf sicher.

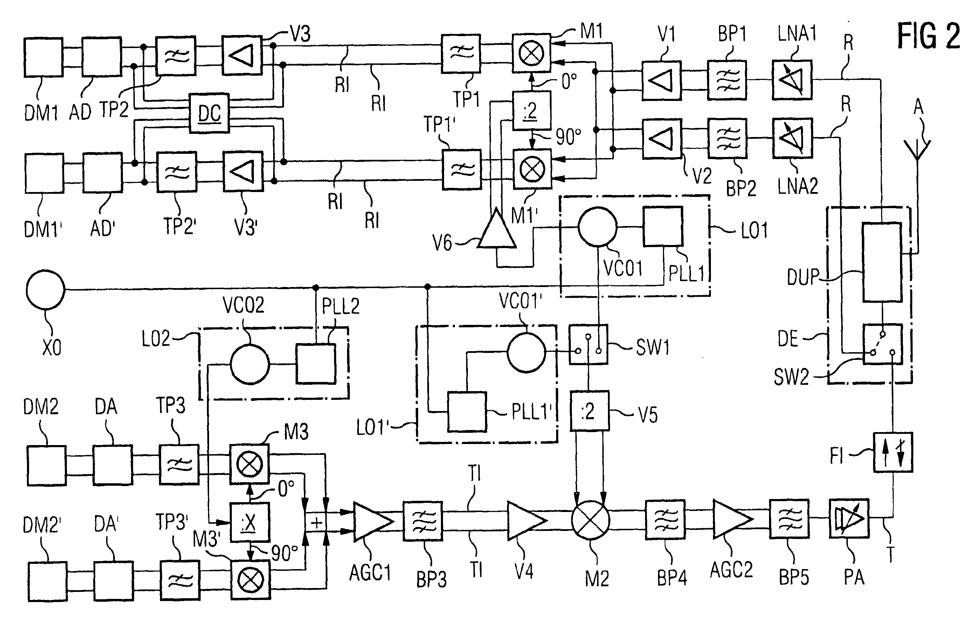

Figur 2 zeigt ein zweites Ausführungsbeispiel mit einer Duplex-Einheit DE, welche eine Frequenzweiche DUP und einen Schalter SW2 aufweist. Durch geeignete Wahl von Sende- und Empfangsfiltern trennt die Frequenzweiche DUP das FDD-Downlink-Band, welches einem ersten rauscharmen Vorverstärker LNA1 zugeführt wird, von FDD-Uplink- und TDD-Bändern. Das Auftrennen von Senden und Empfangen im TDD-Betrieb erfolgt im zweiten Schalter SW2. Der zweite rauscharme Vorverstärker LNA2 dient zum Verstärken im TDD-Empfang. Die den rauscharmen Vorverstärkern LNA1, LNA2 nachgeschalteten Bandpaßfilter BP1, BP2 sind an die jeweiligen Empfangs-Frequenzbänder angepaßt, ebenso wie die ihnen nachgeschalteten Verstärker V1, V2. Zur Umsetzung der Empfangsfrequenzen in eine Zwischenfrequenz von 0 Megahertz sind zwei erste Mischer M1, M1' vorgesehen, denen jeweils ein Tiefpaßfilter TP1, TP1' nachgeschaltet ist. Den ersten Mischern M1, M1' wird eine halbierte erste Lokaloszillator-Frequenz LO1 zugeführt, welche in einem ersten Lokaloszillator LO1 generiert und in einem Verstärker V6 verstärkt wird. Mit zusätzlichen Verstärkern V3, V3' mit nachgeschalteten Tiefpaßfiltern TP2, TP2', bei denen mit einem Kompensator DC eine DC-Offset-Kompensation ausgeführt wird, werden die Zwischenfrequenz-Signale einer AD-Wandlung AD, AD' zugeführt. Alternativ zu dieser DC-Offset-Kompensation ist eine AC-Kopplung möglich. Sendeseitig T ist an der Duplex-Einheit DE ein Richtungsfilter FI angeschlossen, dem ein regelbarer Leistungsverstärker PA sowie ein Bandpaß-Filter BP5 vorgeschaltet sind. Diesen ist ein Regelverstärker AGC2 vorgeschaltet.

Über ein weiteres Bandpaß-Filter BP4 ist ein zweiter Mischer M2 angeschlossen, der die Sende-Zwischenfrequenz auf die jeweils gewünschte Sendefrequenz unter Benutzung einer Lokaloszillatorfrequenz hochmischt. Ein erster Schalter SW1 kann die dem zweiten Mischer M2 über einen Teiler V5, der durch zwei teilt, zuzuführende Oszillationsfrequenz zwischen dem ersten Lokaloszillator LO1 und einem weiteren Lokaloszillator LO1' umschalten. Dem zweiten Mischer M2 sind dritte Mischer M3, M3' vorgeschaltet, welche in Digital/Analog-Wandlern DA, DA' und Tiefpaßfilern TP3, TP3' aufbereitete Signale mittels zweitem Lokaloszillator LO2 auf die Sende-Zwischenfrequenz hochmischen. Im Sende-Zwischenfrequenzpfad TI zwischen zweitem und drittem Mischer M2, M3 sind ein Verstärker V4, ein Bandpaßfilter BP3 sowie ein Regelverstärker AGC1 vorgesehen. Die Lokaloszillatoren LO1, LO1', LO2 weisen jeweils einen Phasenregelkreis PLL1, PLL1', PLL2 sowie einen spannungsgeregelten Oszillator VCO1, VCO1', VCO2 auf.

Die Schaltungsanordnung einer Sende- und Empfangseinheit gemäß Figur 2 ermöglicht den Betrieb mit Frequenzduplex von fester Duplexfrequenz, Frequenzduplex mit variabler Duplexfrequenz sowie Zeitduplex. Wenn einem Netzbetreiber eine geringe Bandbreite von beispielsweise 15 Megahertz in einem UMTS-System zur Verfügung steht, kann in energiesparender Weise mit vorliegender Sende- und Empfangseinheit ein FDD-Betrieb mit variabler Duplexfrequenz unter Verwendung lediglich eines ersten Lokaloszillators LO1 erfolgen, welcher an erste und zweiten Mischer M1, M2 angeschlossen ist. Die beschriebene Schaltungsanordnung ermöglicht eine Integration hoher Dichte.

## Patentansprüche

1. Sende- und Empfangseinheit mit
- einer Duplexeinheit (DE), die an eine Antenne (A) anschließbar ist, und die einen Sendezweig (T) von einem Empfangszweig (R) trennt,
- einem ersten Mischer (M1), der eingangsseitig an den Empfangszweig (R) angeschlossen ist, der an einen ersten Lokaloszillator (LO1) angeschlossen ist, und der ausgangsseitig an einen Empfangs-Zwischenfrequenzpfad (RI) angeschlossen ist,
- einem zweiten Mischer (MI2), der ausgangsseitig an den Sendezweig (T) angeschlossen ist, der eingangsseitig an einen Sende-Zwischenfrequenzpfad (TI) angeschlossen ist, und der mit einem Lokaloszillator (LO1, LO1') verbunden ist,
- wobei die Zwischenfrequenz des Empfangs-Zwischenfrequenzpfads (RI) in einem Bereich von 0 bis 0,5 Megahertz liegt und
- wobei die Zwischenfrequenz des Sende-Zwischenfrequenzpfads (TI) in einem Bereich von 180 Megahertz bis 200 Megahertz liegt.

2. Sende- und Empfangseinheit nach Anspruch 1,
**dadurch gekennzeichnet, daß**
die Zwischenfrequenz des Sende-Zwischenfrequenzpfads (TI) 180 Megahertz oder 185 Megahertz oder 189,6 Megahertz oder 189,8 Megahertz oder 190 Megahertz oder 190,2 Megahertz oder 190,4 Megahertz oder 195 Megahertz oder 200 Megahertz beträgt.

3. Sende- und Empfangseinheit nach Anspruch 1 oder 2,
**dadurch gekennzeichnet, daß**
der zweite Mischer (M2) mit dem ersten Lokaloszillator (LO1) verbunden ist.

4. Sende- und Empfangseinheit nach Anspruch 1 oder 2,
**dadurch gekennzeichnet, daß**
an den zweiten Mischer (M2) ein erster Umschalter (SW1) angeschlossen ist, der mit dem ersten Lokaloszillator (LO1) und einem weiteren Lokaloszillator (LO1') verbunden ist.

5. Sende- und Empfangseinheit nach einem der Ansprüche 1 bis 4,
**dadurch gekennzeichnet, daß**
an den zweiten Mischer (M2) ein dritter Mischer (M3) angeschlossen ist, der mit einem D/A-Wandler (DA) und mit einem zweiten Lokaloszillator (LO2) verbunden ist.

6. Sende- und Empfangseinheit nach einem der Ansprüche 1 bis 5,
**dadurch gekennzeichnet, daß**
die Lokaloszillatoren (LO1, LO1', LO2) je einen spannungsgeregelten Oszillator (VCO1, VCO1', VCO2) und einen Phasenregelkreis (PLL1, PLL1', PLL2) aufweisen.

7. Sende- und Empfangseinheit nach einem der Ansprüche 1 bis 6,
**dadurch gekennzeichnet, daß**
die beiden Zwischenfrequenz-Pfade (TI, RI) an eine Basisband-Einheit angeschlossen sind, welche einen digitalen Mischer aufweist, der in Schritten von 200 Kilohertz verstimmbar ist.

8. Sende- und Empfangseinheit nach einem der Ansprüche 1 bis 7,
**dadurch gekennzeichnet, daß**
die Sende- und Empfangseinheit ein UMTS-Transceiver ist, dessen Duplex-Einheit (DE) eine Frequenzweiche (DUP) und einen zweiten Schalter (SW2) aufweist.
